# EUROPEAN PATENT SPECIFICATION

(11) **EP 2 108 254 B1**
(45) Date of publication and mention of the grant of the patent: **24.08.2011**
(21) Application number: 09157471.5
(22) Date of filing: 07.04.2009
(51) Int. Cl.: A01K 1/015

(54) **Floor element for a stable floor with grooves for drainage**
Bodenelement für einen Stallboden mit Drainagespaltenrost
Élément de plancher pour plancher d'étable avec caillebotis pour le drainage

(30) Priority: 07.04.2008 NL 2001454
(43) Date of publication of application: 14.10.2009
(73) Proprietor: Swaans, Johannes, 5591 PW Heeze (NL)
(72) Inventor: Swaans, Johannes, 5591 PW Heeze (NL)
(74) Representative: Verhees, Godefridus Josephus Maria

(56) References cited:
- BE-A- 440 659
- CH-A- 107 354
- NL-A- 6 513 865
- NL-A- 9 300 207

## Description

### Field of the invention.

The invention relates to a floor element for a stall floor, which floor element is provided with two abutting sides across from each other against or along which at a small distance, when used in a stall floor, neighbouring floor elements are placed and which floor element is provided with a walking surface that has a slot grid for drainage of liquid, which slot grid comprises main slots which extend in essence crosswise to the abutting sides and of which the depth continuously increases from one of the abutting sides to the other abutting side.

Cow-houses in Holland are usually built having plate-formed floor elements over manure cellars. In the place of the abutting sides (these are the sides against or along which at a small distance, when used in a stall floor, neighbouring floor elements are placed) there are usually openings for drainage of liquid (urine) to the manure cellar. A large problem for the accommodation of livestock is that the manure and the urine are not discharged fast enough to the manure cellar so that emission of ammonia takes place.

### State of the art.

A floor element of this type is known from NL-A-6513865. In this known floor element slots have large dimensions and are also used for drainage of solid constituents of the manure to the manure cellar. This known floor element is unsuitable for use in combination with a manure scraper. A manure scraper is used for scraping the solid constituents of the manure present on the walking surface into the manure cellar through openings located between the floor elements. This is done every so many days. In the meantime, however, there is emission of ammonia.

### Summary of the invention.

It is an object of the invention to provide a floor element of the type defined in the opening paragraph with which, when used in a stall floor with a manure scraper, the emission of ammonia can be reduced. For this purpose the floor element according to the invention is characterised in that the slot grid further includes cross slots which extend from one of the main slots to a neighbouring main slot, whereby the bounding walls of the main slots and/or the cross slots have a round shape in cross section. As a result, urine will flow away more quickly to the main slots and then to the manure cellar located underneath than in the case where the walking surface between the main slots is completely level, so that there will be less emission of ammonia, and fewer solid constituents will stay behind in the slots than in the case where the slots have a rectangular or V-shaped cross section, in which case solid constituents can stick to the corners more quickly.

It should be observed that a slot grid with cross slots in a walking surface is known from NL-A-9300207.

An embodiment of the floor element according to the invention is characterised in that the depth of at least a plurality of the cross slots vary as regards length, while preferably the depth continuously increases from the centre to the ends and preferably evenly as well. This ensures that it is not possible for urine to remain in the slots, so that there is always a proper discharge of urine.

The cross slots preferably have a V shape in plan view.

Furthermore, preferably the depth of the main slots evenly increases over the entire length of the slots.

The floor element is preferably plate-formed and has the same thickness everywhere while the walking surface is level.

### Brief description of the drawings.

The following description relating to the appended drawings, the whole given by way of non-limiting example of the floor element according to the invention, will provide better understanding of how the invention can be realised, in which:
Fig. 1 shows a perspective view of an embodiment of the floor element according to the invention;
Fig. 2 shows a detail of the floor element;
Fig. 3 shows a plan view of the floor element; and
Fig. 4 shows a cross-sectional view of the floor element.

### Detailed description of the drawings.

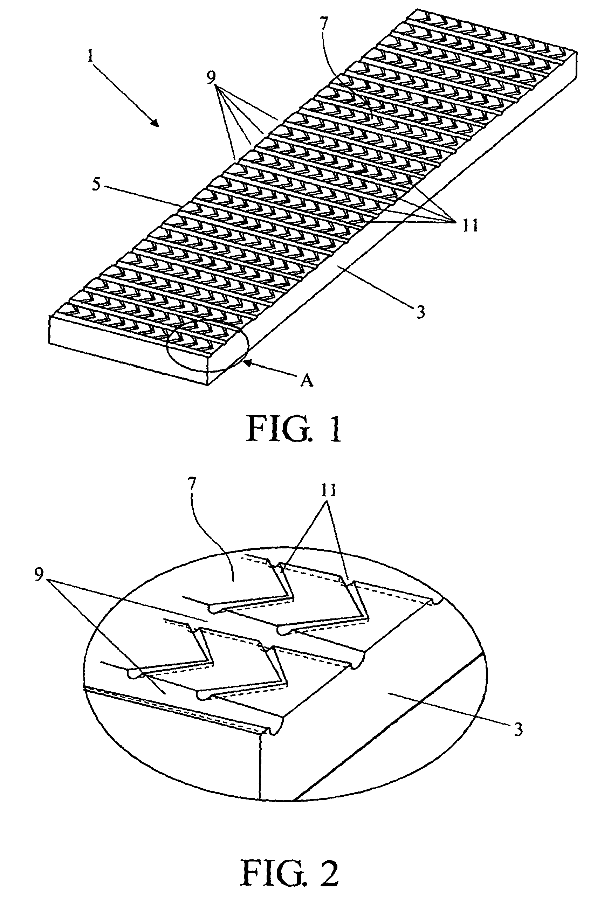

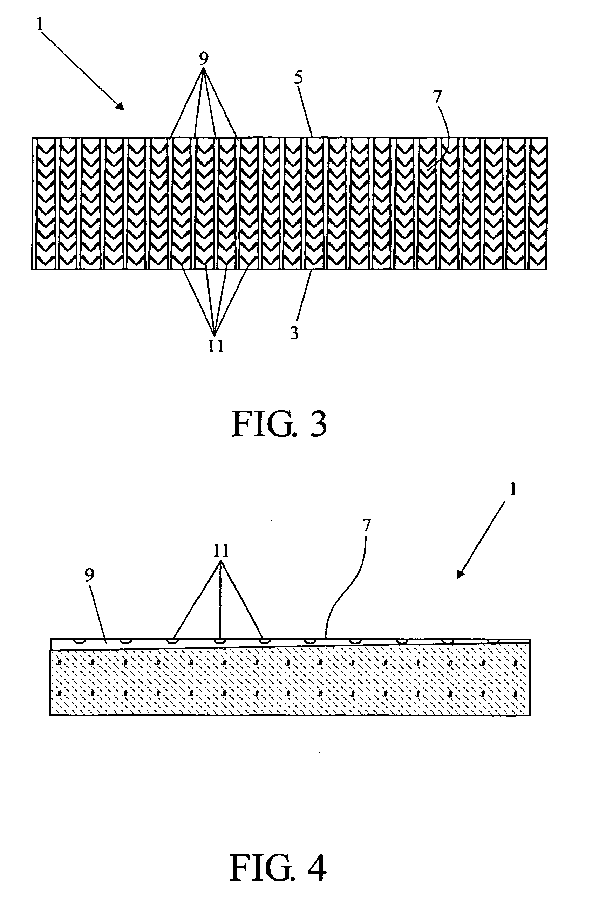

Figs. 1, 3 and 4 show an embodiment of the floor element for a stall floor according to the invention in a perspective view, plan view and cross-sectional view respectively. Fig. 2 shows a magnified detail of the detail A of the floor element shown in Fig. 1. The floor element 1 has the form of a plate having the same thickness all around and has two abutting sides 3 and 5 across from each other against or along which at a small distance adjacent floor elements are placed when used in a stall floor. The floor element 1 has a level walking surface 7 which is provided with a slot grid for discharging urine.

The slot grid has main slots 9 which extend crosswise to the abutting sides 3 and 5. The depth of the main slots evenly and continuously increases from one of the abutting sides 3 to the other abutting side 5.

The slot grid further has cross slots 11 which, in plan view, show a V-shaped pattern and which extend from one of the main slots to an adjacent main slot. The depth of the cross slots evenly and continuously increases from the centre to the ends.

The bounding walls of the main slots and of the cross slots have a round shape in cross section, so that manure can stick to the slots with greater difficulty.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A floor element (1) for a stall floor, which floor element is provided with two abutting sides (3,5) across from each other against or along which at a small distance, when used in a stall floor, neighbouring floor elements are placed and which floor element is provided with a walking surface (7) that has a slot grid for drainage of liquid, which slot grid comprises main slots (9) which extend in essence crosswise to the abutting sides and of which the depth of the main slots continuously increases from one of the abutting sides to the other abutting side, **characterised in that** the slot grid further includes cross slots (11) which extend from one of the main slots (9) to a neighbouring main slot, whereby the bounding walls of the main slots and/or the cross slots have a round shape in cross section.

2. A floor element (1) as claimed in claim 1, **characterised in that** the depth of at least a plurality of the cross slots (11) vary as regards length.

3. A floor element (1) as claimed in claim 2, **characterised in that** the depth of the cross slots (11) continuously increases from the centre to the ends.

4. A floor element (1) as claimed in claim 3, **characterised in that** the depth of the cross slots (11) evenly increases from the centre to the ends.

5. A floor element (1) as claimed in any one of the preceding claims, **characterised in that** the cross slots (11) have a V-shaped pattern in plan view.

6. A floor element (1) as claimed in any one of the preceding claims, **characterised in that** the depth of the main slots (9) evenly increases over the entire length of the slots.

7. A floor element (1) as claimed in any one of the preceding claims, **characterised in that** the floor element (1) is plate-formed and has the same thickness all around while the walking surface is level.

## Patentansprüche

1. Fußbodenelement (1) für einen Stallboden, welches mit zwei einander gegenüber angeordneten, anliegenden Seiten (3, 5) versehen ist, neben oder an denen bei der Anwendung in einem Stallboden in geringem Abstand benachbarte Fußbodenelemente angebracht sind, wobei das Fußbodenelement mit einer Lauffläche (7) mit verschiedenen Schlitzen für die Ableitung von Flüssigkeiten versehen ist, welche Hauptschlitze (9) umfassen, die hauptsächlich quer zu den anliegenden Seiten verlaufen und sich von einer der anliegenden Seiten zur anderen anliegenden Seite kontinuierlich vertiefen, **dadurch gekennzeichnet, dass** die verschiedenen Schlitze ferner Querschlitze (11) umfassen, die von einem der Hauptschlitze (9) bis zu einem benachbarten Hauptschlitz verlaufen, wobei die Begrenzungswände der Hauptschlitze und/oder der Querschlitze einen rund ausgebildeten Querschnitt aufweisen.

2. Fußbodenelement (1) nach Anspruch 1, **dadurch gekennzeichnet, dass** die Tiefe mindestens einer Anzahl der Querschlitze (11) entlang des Schlitzes variiert.

3. Fußbodenelement (1) nach Anspruch 2, **dadurch gekennzeichnet, dass** die Tiefe der Querschlitze (11) von der Mitte zu den Enden kontinuierlich zunimmt.

4. Fußbodenelement (1) nach Anspruch 3, **dadurch gekennzeichnet, dass** die Tiefe der Querschlitze (11) von der Mitte zu den Enden gleichmäßig zunimmt.

5. Fußbodenelement (1) nach einem der vorangegangenen Ansprüche, **dadurch gekennzeichnet, dass** die Querschlitze (11) in der Draufsicht einen V-förmigen Verlauf haben.

6. Fußbodenelement (1) nach einem der vorangegangenen Ansprüche, **dadurch gekennzeichnet, dass** die Tiefe der Hauptschlitze (9) über die gesamte Länge der Schlitze gleichmäßig zunimmt.

7. Fußbodenelement (1) nach einem der vorangegangenen Ansprüche, **dadurch gekennzeichnet, dass** das Fußbodenelement (1) plattenförmig ist und überall die gleiche Dicke besitzt, wobei die Lauffläche eben ist.

## Revendications

1. Elément de sol (1) pour un sol d'étable, lequel élément de sol est pourvu de deux côtés contigus placés face à face (3,5) contre lesquels ou le long desquels à faible distance, en cas d'utilisation dans un sol d'étable, des éléments de sol adjacents sont placés, et lequel élément de sol est pourvu d'une surface de marche (7) pourvue d'un motif de cannelures pour l'écoulement de liquide, lequel motif de cannelures comprend des cannelures principales (9), qui s'étendent en grande partie en travers aux côtés contigus, et dont la profondeur à partir d'un des côtés contigus vers l'autre côté contigu augmente en continu, **caractérisées en ce que** le motif de cannelures comprend en outre des cannelures transversales (11), qui s'étendent d'une des cannelures principales (9) jusqu'à une cannelure principale voisine, où les parois de délimitation des cannelures principales et/ou des cannelures transversales ont une forme ronde en coupe transversale.

2. Elément de sol (1) selon la revendication 1, **caractérisé en ce que** la profondeur d'au moins une des cannelures transversales (11) varie sur la longueur.

3. Elément de sol (1) selon la revendication 2, **caractérisé en ce que** la profondeur des cannelures transversales (11) augmente en continu du centre vers les extrémités.

4. Elément de sol (1) selon la revendication 3, **caractérisé en ce que** la profondeur des cannelures transversales (11) augmente de manière régulière du centre vers les extrémités.

5. Elément de sol (1) selon l'une des revendications précédentes, **caractérisé en ce que** les cannelures transversales (11) présentent un rétrécissement en V en vue de dessus.

6. Elément de sol (1) selon l'une des revendications précédentes, **caractérisé en ce que** la profondeur des cannelures principales (9) augmente régulièrement sur toute la longueur des cannelures.

7. Elément de sol (1) selon l'une des revendications précédentes, **caractérisé en ce que** l'élément de sol (1) est lamelliforme et de même épaisseur partout, où la surface de marche est plane.
